(12)     **EUROPEAN PATENT APPLICATION**

(43) Date of publication:
**10.06.2015 Bulletin 2015/24**

(21) Application number: **13195762.3**

(22) Date of filing: **04.12.2013**

(51) Int Cl.:
*H04W 72/04* (2009.01)          *H04W 92/20* (2009.01)
*H04W 36/00* (2009.01)          *H04W 16/08* (2009.01)
*H04W 84/04* (2009.01)

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Roullet, Laurent
  91620 NOZAY (FR)**
• **Ratovelomanana, Frédéric
  91620 NOZAY (FR)**

(74) Representative: **Camus, Olivier Jean-Claude
Cabinet Camus Lebkiri
25, Rue de Maubeuge
75009 Paris (FR)**

---

(54)     **Utility-based inter-cell interference reduction method for dense LTE networks relying on the
distribution of pathloss information**

(57)     A cellular network modem comprising means for distributing pathloss information via the modem.

EP 2 882 241 A1

## Description

The invention concerns the radio access telecommunication cellular networks in general and, in particular, concerns, the networks conforming to the so-called "Long term Evolution" (LTE) standard, which, starting at its release 10, introduces time diversity in order to mitigate the mutual interference between the cells of a network by a technique called "enhanced intercell interference coordination" (eICIC).

The radio access telecommunication cellular networks are widely used in the art prior to the invention to provide mobile user equipments such as mobile phones with data exchange services as voice transmission or internet access.

The cellular networks are divided spatially in geographical cells organized in a network topology to provide user equipment access to the network from any cell of the network. Each cell comprises a base station or radio modem serving user equipments within the area of the cell. A base station constitutes a node of the network since it concentrates the data traffic from several user equipments. In the LTE standard, a base station or node base is called an "enhanced node base station" or "enhanced NodeB" or "eNB".

For a given user equipment or user, the quality of the service is summed up by the instantaneous throughput of information attributed to the user by the information channel established with the network, at a given node. Such quality is decreased when interference from base stations of other cells are encountered by the user equipment. The reason for this is that the sum of all the powers received from these other cells, being not used for signal transmission, is assimilated to noise and decreases the signal to noise ratio (SINR) at the user equipment level. Also, to maintain the signal to noise ratio and correspondingly, a guaranteed data throughput for the user equipment, it is required to increase the signal power which increases the energy consumption of the cellular network. In any case, the yield of a cellular network defined as the quantity of information exchanged between the users and the network, divided by the energy required to obtain the exchange is decreased by the presence of interferences between cells of a cellular network.

The presence of interferences between nodes or cells of a cellular network is so universally recognized as having to be avoided in network design.

To the end of the present application, optimizing a cellular network will so be defined as reducing the interferences between the cells of the network.

However since the throughput of a given base station is limited and as there is a constant demand of the users to increase the data throughput, there is an important need to augment the number of cells in any cellular network, i.e. to make the network denser and interferences between cells cannot be avoided.

Thus, in the art prior to the invention, the densification of a cellular network comes at the price of increased interferences between the cells of the network, which cancels the advantage of such densification.

As a result the LTE standard has recognized this limitation and introduced in its release 10, means for coordinating cells interference with operational parameters of the base station of a cell, which are parameters able to influence the user attachment to a cell or equivalently the user handover from a cell to another or to introduce coordinated emission between cells of a network.

These operational parameters comprise in the LTE rel.10 cell individual offset (CIO) and almost blank subframes scheduling (ABS). These operational parameters comprise in the LTE rel.8/9 cell individual offset (CIO) and almost blank subframes scheduling (ABS).

The CIO technique basically affects the measurement, by the user equipment, of the electromagnetic power received from an interfering station with an offset.

The ABS technique basically affects the emission of the base station of a given cell with time windows during which its emission power is highly reduced, thus decreasing the interference due to this given cell with other neighboring cells.

However, despite the means for influencing the interference between cells are provided by the standard at the cell level for the base station complying with the standard, there is no indication on how to perform the minimization of the influence of interferences in a cellular network and to obtain for the whole set of cells of such a network, operational values of CIO and ABS for each cell that minimize the interferences between cells of the network and to maximize the yield of a network.

In prior art, this technical problem is simply considered impossible to solve and it constitutes a serious limitation to the design of dense and effective cellular networks.

On the user point of view, it is observed that the user equipments are locally able to transmit pathloss information up to the modem or eNB to which they are attached in a cell. The modem uses such information to determine zones in its area of emission in which it groups users. These pathloss information is representative of the power of each interferer to which the user terminal is submitted.

In this application, "pathloss" is defined as follows:

> "Path loss (or path attenuation) is the reduction in power density (attenuation) of an electromagnetic wave as it propagates through space. Path loss is a major component in the analysis and design of the link budget of a telecommunication system".

Despite its use in link budget and design of a telecommunication system as a cellular network, the transmission of pathloss information at a higher level in the network, for intercell coordination is not recognized as a viable solution for improving the yield of a network or optimizing it.

A first reason for this is that the amount of information to re-transmit for a given cell would be equal to the number of users multiply by the number of cells surrounding the given cell and interfering with it. Such data traffic being only devoted to control it is induced that such a retransmission would hinder any improvement of the network yield.

In addition, even though such pathloss information was available in a centralized way at some part of a cellular network, the resulting optimization of a generic cost function of the pathloss parameters is enviewed as being at least equivalent in complexity to a non deterministic polynomial (NP) problem, the solution of which is not known in prior art.

As a result, the pathloss information is unused for network eICIC in LTE networks and a man skilled in the art is not urged to use such information for optimizing a cellular network.

In this context, the invention concerns:

A cellular network modem comprising means for distributing pathloss information via the modem.

In variants of the invention:

- the network modem is an eNodeB.

- the means for distributing pathloss information via the modem are an X2 interface.

- the network modem is an eNodeB and the means for distributing pathloss information via the modem are an X2 interface.

A method for optimizing a cellular network, the network comprising a set of modems, each as above, and a set of mobile user equipments, the network having a cost function in energy having to be minimized to optimize the network, the method comprising the following steps:

- for each given modem "Mi" of the set of modems do:

- for each given user equipment "Uj" being in communication with Mi do:

- for each given modem "Mk" interfering with Mi for Uj, do:

    - measure the pathloss information "Pijk" between "Uj" and "Mk" to be collected by Mi ;

    - transmit the pathloss information Pijk to Mi;

    - distribute the pathloss information Pijk via Mi over the network;

- repeat over k;

- repeat over j;

- repeat over i;

- collect the Pijk samples in a calculator connected to the network;

- express the cost function as a function of the Pijk ;

- calculate a set of cost function values, in function of the values of a set of operational parameters of the modems, thanks to the Pijk corresponding to the operational parameters values;

- choose the set of optimal operational parameters minimizing the set of cost function values;

- apply the optimum set of operational parameters to the modems.

In variants of the method:

- said user equipment "Uj" being in communication with Mi consists in a single user equipment.

- said user equipment "Uj" being in communication with Mi consists in a collection of user equipments localized in a geographical zone and grouped by Mi, pathloss information, distributed over the mobile phone network, for the collection, consisting in statistics of pathloss information over the collection.

- the optimum set of operational parameters of the modems comprises the optimum cell individual offset values for the modems.

- the optimum set of operational parameters of the modems comprises the optimum almost blank frame scheduling pattern values for the modems.

- the optimum set of operational parameters of the modems comprises the optimum cell individual offset values for the modems and the optimum almost blank frame scheduling pattern values for the modems.

- the pathloss information Pijk is distributed via Mi, over the network, over a logical X2 interface.

- in order to minimize the cost function in function of the operational parameters, each operational parameter of a given modem in the set of modems is limited to a range and to discrete values corresponding to the capacity of tuning this parameter, as available on the given modem.

In a first embodiment, the invention is applied within an LTE network of release at least equal to 10. In addition the network is composed of macro cells, the base stations of which emit a power of typically 40Watt and of small cells or metro cells, the power of which is typically 1 Watt.

In such a network, the discrepancy in power induces a very difficult handover of a user equipment of the macro cells toward the small cells. Practically, except for user at cell center, no handover can be practiced at a user level and the result is that the modem of a macro cell uses pathloss information to create two zones for the users: one center zone in which it will stay in charge of the user equipments and one outer zone in which it will foster the handover of user equipments toward another cell.

Between the modems of the network, or eNB's, a peer to peer logical X2 interface with rich semantic, i.e. control of CIO and ABS is available.

The eNB modems of the network are modified so as to act as gateways, for pathloss information in provenance from the user equipments attached to the cell for which a modem fulfills the function of base station.

Each eNB is so provided with an ASIC or electronic circuitry to receive the pathloss information from inside the cell and to re-transmit such information over the network on the X2 interface via the modem. The resource reporting capability of the X2 interface can be used for such purpose.

Otherwise stated, the eNB implements an X2 interface or socket to broadcast the pathloss information over the cellular network, on a per user basis. However, in order to limit the control data traffic on the network, only statistics on a collection of users grouped in zone can be broadcasted.

For instance, the sum of the powers of a given interferer over the population of users can be transmitted or both the number of users and the average power of each interferer for the population can be transmitted. Whatever the type of grouping of the users within the cell, a modem cell is viewed outside the cell as communicating pathloss information at a user level from interferers for the given cell. Such information is viewed as a vector of powers received by the user from the interferers.

Depending on the spatial resolution of the modem in terms of pathloss information, more or less information can so be re-transmitted in a standardized way via the X2 interface of the eNB, either for a single user equipment either for zones of user groups, either in a limit case for all the users of a cell. It can be noticed that in this last limit case, the pathloss information is largely cell dependent and characterizes the interference status of the network at cell level with only one virtual user.

To illustrate the utility of the modem of the first embodiment, we describe in a second embodiment, a method to benefit its advantages in an LTE network. To this end, a second embodiment is considered, in which a set of modems realized according to the first embodiment are present to form a cellular network over X2 interface. A given modem of the set is so broadcasting the pathloss information of its users about the interferers, i.e. the other modems of the set which are received by the users.

In such a network, the CIO and ABS are the operational parameters for the types of modem encountered in the network: CIO and ABS for macro cells (and more generally for aggressor cells as per 3GPP TS 36300 Rel.10 terminology) and CIO only for metro cells (and more generally for victim cells as per 3GPP TS 36300 Rel.10 terminology).

In such a network, the optimization problem is to maximize the network utility function or cost function U or minimize the function -U:

$U = \sum_i U_i$ where i is an integer index for the base stations and Ui the utility of one base station in the network.

The definition of Ui is as follows, where rij is the data throughput of a user equipment attached to the base station i and j index of a user equipment:

$$U_i = \sum_j \log(r_{ij})$$

To maximize the throughput of each UE, it can be observed that the interferers being characterized by their power Pijk as reported to the modem i by its users :

$$r_{ij} = \text{K}.\log(1 + SINR_{ij})$$

Where K is a proportional parameter.
With the signal to noise ratio SINR given by:

$$SINR_{ij} = \frac{Piji}{\sigma + \sum_{k \neq i} Pijk}$$

Piji corresponding to the signal power of the base station i received by the user Uj of cell i.
Pijk corresponding to the signal power of the base station k received by the user Uj of cell i.

Sigma corresponds to the noise

Strictly speaking the value of k excludes the value k=i to take into account only the interfering power.
For a CIO variation inducing a user handover from cell i to cell k the SINR changes to:

$$SINR_{kj} = \frac{Pkjk}{\sigma + \sum_{k' \neq i} Pijk'}$$

An almost blank frame reducing by ABS the power Pijk for k=k0 to almost zero gives a SINR equal to:

$$SINR_{ij} = \frac{Piji}{\sigma + \sum_{k \neq (k_0;i)} Pijk}$$

It is obtained that the variation of CIO and ABS induces changes on the SINR which are easily calculated when the Pijk (derived from transmission power and pathloss) are known for all the cells having mutual interferences of the network.

As a result, the SINR and the utility function of a cellular network can be optimized with respect to variations of CIO and ABS by converting these variations in SINR values as soon as the transmission power and pathloss values are known for the users of the cells ??.

This means that the utility function of a cellular network can be optimized with prior art techniques with respect to the variables CIO and ABS for each cell in order to determine an optimum set of CIO and ABS for macro cells and CIO for metro cells, i.e. over the whole set of cells of a cellular network, with a uniform treatment of the whole cells, indistinctively.

In order to obtain such values, the network designer only needs to know what are the range of the operational parameters of a given cell and the resolution available over each range, then to iterate over all the possible combinations of the operational parameters and calculate the SINR and the utility function for all the combinations of operational parameters values and choose the combination of the operational parameters giving the lowest cost function (if minimizing) or the highest utility (if maximizing). As there is practically a finite number of values for the operational parameters, the complexity of the problem can be easily evaluated and adapted to the calculating power, for instance by grouping users in collection for each cell.

For instance, if the ABS is described on a range of 0 to 50% of "blanking" by ten steps of 5% and the CIO is described by a power offset that is used to indicate a cell specific offset to be applied when evaluating triggering conditions for measurement reporting (The value in dB ranges between -24dB and +24dB by step of 2 dB), the resulting theoretical number of cases for a brute force approach for M modems or eNBs of a cellular LTE network will be 100^M (one hundred to the power M) . In the proposed approach, the utility function is optimized for each node sequentially in an iterative approach. So one will so have 100 cases per cell which means that the complexity of the problem for a set of N modems is equivalent to 100.N times the calculation of the utility function of the whole network for which the limited interaction of cells to their neighborhood induces calculus over largely empty matrices or on a limited number of cases. The optimization is so possible with a limited computing power.

Such a result ensures industrially to optimize the design of a cellular network with time of response of the order of one second or less.

The method disclosed can be summarized as follows in a network having M modems, each conforming to the fisrt embodiment, having N users per cell (N variable over each cell) and having K neighbor cells interfering with its communication with users (K variable for each user):

- for each given modem "Mi" of the set of modems do:

- for each given user equipment "Uj" being in communication with Mi do:

- for each given modem "Mk" interfering with Mi for Uj, do:

  - measure the pathloss information "Pijk" between "Uj" and "Mk" to be collected by Mi ;

  - transmit the pathloss information Pijk to Mi ;

  - distribute the pathloss information Pijk via Mi over the network;

- repeat over k;

- repeat over j;

- repeat over i;

- collect the Pijk samples in a calculator connected to the network;

- express, as a function of the Pijk, a cost function to be minimized in order to optimize the network;

- calculate a set of cost function values, in function of the values of a set of operational parameters of the modems, thanks to the Pijk corresponding to the operational parameters values ;

- choose the set of optimal operational parameters minimizing the set of cost function values;

- apply the optimum set of operational parameters to the modems.

Variants of the method can be derived by grouping internally to the cells the user in groups of users for which a statistics in broadcast over the network, this situation implies only that in the method, the consequences on the group of users will be common: common handover, common attachment or common throughput quality. The only condition for these statistics to be effective within the described embodiments, is that they represent long term statistics, meaning that the statistics are stable for a period of time longer than the response time observed for the network between the transmission of the pathloss information and the application of the optimum set of operational parameters to the modems.

This second embodiment will be easily integrated in LTE network by choosing the X2 interface which is the peer-to-peer communication interface for the eNBs. In such a case, the pathloss information will only have to be integrated or defined in an extension of the X2 interface for the broadcasting over the network of this information.

A X2 proxy or a calculator able to collect the pathloss information for the whole cells of a network can be used , provided it has means of applying the results in terms of CIO and ABS.

The invention when integrated over an LTE X2 network, will provide the best advantages over prior art due to a separation in two parts:

- a first part of communications means over the X2 interface already standard for inter eNB communications which offer a frequency transmission of information of up to 1hz and a rich semantic: CIO, ABS pattern and energy aspects already available. This means that the energy aspects will be available if necessary for optimization in LTE with the method presented here. The adaptation of this part to existing networks for transmitting pathloss information is so easy to implement.

- a second part for data generation being independent of the eNB way of defining the treatment of user equipment (single user of collection of users). In order to collect "long term statistics " on group of users, on LTE (once again long term meaning longer than the optimization decision process and with a good semantic on the interference experienced from the neigbours), it will be possible to obtain such a time coherency, to differentiate between LTE of release =<10 (inferior or equal to ten) where RRC level messages will be used from LTE release >10 (superior to ten) where PHY level messages will be preferred. In this part, the optimization part may compute a database on the user group statistics of the cells to help the decision/optimization process.

The ability to locate the computing element anywhere in the network is also an advantage of the embodiments presented.The embodiments presented are not limited to the relation between macro cells and metro cells and can be extended to the relation between aggressor cells (refer to 3GPP TS 36.300) and victim cells (refer to 3GPP TS 36.300). Therefore the embodiments can be applied to femto or pico cells, without limiting the densification of cellular networks on the ground on the emitting power of radio access network modems used for the cells.

The embodiments presented above may be adapted to any set of operational parameters, such a parameter influencing always the cost in energy and so the interference in a cellular network and thus the SINR in these networks.

For instance, the interference of several independent networks might benefit the embodiments presented above.

The invention can be applied industrially and usefully to the domain of cellular network design.

## Claims

1. A cellular network modem comprising means for distributing pathloss information via the modem.

2. A cellular network modem according to claim 1, which is an eNodeB.

3. A cellular network modem according to claim 1, in which the means for distributing pathloss information via the modem are an X2 interface.

4. An eNodeB according to claim 2, in which the means for distributing pathloss information, via the eNodeB, are an X2 interface.

5. A method for optimizing a cellular network, the network comprising a set of modems according to claim 1 and a set of mobile user equipments, the network having a cost function in energy having to be minimized to optimize the network, the method comprising the following steps:

   - for each given modem "Mi" of the set of modems do:
   - for each given user equipment "Uj" being in communication with Mi do:
   - for each given modem "Mk" interfering with Mi for Uj, do:

      - measure the pathloss information "Pijk" between "Uj" and "Mk" to be collected by Mi ;
      - transmit the pathloss information Pijk to Mi;
      - distribute the pathloss information Pijk via Mi over the network;

   - repeat over k;
   - repeat over j;
   - repeat over i;
   - collect the Pijk samples in a calculator connected to the network;

- express the cost function as a function of the Pijk
- calculate a set of cost function values, in function of the values of a set of operational parameters of the modems, thanks to the Pijk corresponding to the operational parameters values;
- choose the set of optimal operational parameters minimizing the set of cost function values;
- apply the optimum set of operational parameters to the modems.

6. The method of claim 5, in which said user equipment "Uj" being in communication with Mi consists in a single user equipment.

7. The method of claim 5, in which said user equipment "Uj" being in communication with Mi consists in a collection of user equipments localized in a geographical zone and grouped by Mi, pathloss information, distributed over the mobile phone network, for the collection, consisting in statistics of pathloss information over the collection.

8. The method of claim 5, in which the optimum set of operational parameters of the modems comprises the optimum cell individual offset values for the modems.

9. The method of claim 5, in which the optimum set of operational parameters of the modems comprises the optimum almost blank frame scheduling pattern values for the modems.

10. The method of claim 5, in which the optimum set of operational parameters of the modems comprises the optimum cell individual offset values for the modems and the optimum almost blank frame scheduling pattern values for the modems.

11. The method of claim 5, in which the pathloss information Pijk is distributed via Mi, over the network, over a logical X2 interface.

12. The method of claim 5, in which in order to minimize the cost function in function of the operational parameters, each operational parameter of a given modem in the set of modems is limited to a range and to discrete values corresponding to the capacity of tuning this parameter, as available on the given modem.

Europäisches
Patentamt

European
Patent Office

Office européen
des brevets

# EUROPEAN SEARCH REPORT

Application Number

EP 13 19 5762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOURAD KHANFOUCI ET AL: "Consensus- based decentralization of interior point methods for heterogeneous networks energy saving", PERSONAL INDOOR AND MOBILE RADIO COMMUNICATIONS (PIMRC), 2011 IEEE 22ND INTERNATIONAL SYMPOSIUM ON, IEEE, 11 September 2011 (2011-09-11), pages 300-304, XP032102370, DOI: 10.1109/PIMRC.2011.6139970 ISBN: 978-1-4577-1346-0 | 1-6,11, 12 | INV.<br>H04W72/04<br><br>ADD.<br>H04W92/20<br>H04W36/00<br>H04W16/08<br>H04W84/04 |
| Y | * abstract *<br>* sections I, II, II.A * | 7-10 | |
| X | US 2013/281089 A1 (CHANDRASEKHAR VIKRAM [US] ET AL) 24 October 2013 (2013-10-24)<br>* abstract *<br>* paragraphs [0016], [0019], [0021], [0022], [0023], [0030] - [0034], [0042], [0046], [0059], [0065], [0066], [0074] * | 1-5,8-12 | |
| | | | **TECHNICAL FIELDS SEARCHED (IPC)** |
| Y | SOMASUNDARAM KIRAN: "Proportional Fairness in LTE-Advanced Heterogeneous Networks with eICIC", 2013 IEEE 78TH VEHICULAR TECHNOLOGY CONFERENCE (VTC FALL), IEEE, 2 September 2013 (2013-09-02), pages 1-6, XP032548303, ISSN: 1090-3038, DOI: 10.1109/VTCFALL.2013.6692381 [retrieved on 2013-12-22]<br>* abstract *<br>* sections II.A, III, III.A, IV *<br>* figures 1,4 * | 8-10 | H04W<br>H04L<br>H04J<br>H04B |

-/--

The present search report has been drawn up for all claims

| Place of search | Date of completion of the search | Examiner |
|---|---|---|
| Munich | 15 May 2014 | Dutrieux, Yann |

**Europäisches Patentamt**
**European Patent Office**
**Office européen des brevets**

# EUROPEAN SEARCH REPORT

Application Number

EP 13 19 5762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MITSUBISHI ELECTRIC: "ES Procedure for Compensation Scenario", 3GPP DRAFT; R3-121221 (ES COMPENSATION SCENARIO), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech Republic; 20120521 - 20120525, 12 May 2012 (2012-05-12), XP050611261, [retrieved on 2012-05-12] * page 3, last four lines * | 1-4 | |
| X | NOKIA SIEMENS NETWORKS: "On TDM eICIC Coordination for Macro+Pico Cases", 3GPP DRAFT; R3-102817 PICOMACRO_TDMEICICCOORD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 2 October 2010 (2010-10-02), XP050453624, [retrieved on 2010-10-02] * sections 2, 3 * | 1-4 | |
| Y | US 2013/114434 A1 (MURUGANATHAN SIVA DHARSHAN [CA] ET AL) 9 May 2013 (2013-05-09) * abstract * * paragraphs [0075], [0087] * | 7 | TECHNICAL FIELDS SEARCHED (IPC) |

The present search report has been drawn up for all claims

| Place of search | Date of completion of the search | Examiner |
|---|---|---|
| Munich | 15 May 2014 | Dutrieux, Yann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 19 5762

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | Publication date | Patent family member(s) | Publication date |
|---|---|---|---|
| US 2013281089 A1 | 24-10-2013 | US 2013281089 A1<br>WO 2013163181 A1 | 24-10-2013<br>31-10-2013 |
| US 2013114434 A1 | 09-05-2013 | CA 2795976 A1<br>EP 2590442 A1<br>US 2013114434 A1 | 04-05-2013<br>08-05-2013<br>09-05-2013 |

EPO FORM P0459

For more details about this annex : see Official Journal of the European Patent Office, No. 12/82